(19) 

**Europäisches Patentamt**
**European Patent Office**
**Office européen des brevets**

(11) **EP 3 570 544 A1**

(12) **EUROPEAN PATENT APPLICATION**

(43) Date of publication:
   **20.11.2019 Bulletin 2019/47**

(51) Int Cl.:
   **H04N 19/126** (2014.01)    **H04N 19/182** (2014.01)
   **H04N 19/167** (2014.01)    **H04N 19/597** (2014.01)

(21) Application number: **18305620.9**

(22) Date of filing: **18.05.2018**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(71) Applicant: **InterDigital VC Holdings, Inc.
   Wilmington, DE 19809 (US)**

(72) Inventors:
   • **RACAPE, Fabien
     35576 Cesson-Sévigné (FR)**
   • **GALPIN, Franck
     35576 Cesson-Sévigné (FR)**
   • **ROBERT, Antoine
     35576 Cesson-Sévigné (FR)**

(74) Representative: **Huchet, Anne et al
   InterDigital CE Patent Holdings
   20, rue Rouget de Lisle
   92130 Issy-les-Moulineaux (FR)**

(54) **QUANTISATION FOR OMNIDIRECTIONAL VIDEO**

(57)    A method and an apparatus for coding an omnidirectional video and corresponding method and apparatus for decoding an omnidirectional video are disclosed. According to the present disclosure, for at least one block of a picture of said omnidirectional video, a value of each pixel of said block is scaled (32) according to a spatial position of the pixel in said picture, and said block is encoded (33).

FIG. 3A

**Description**

1. Technical field

A method and an apparatus for coding a video into a bitstream are disclosed. More particularly, a method and an apparatus for coding an immersive video are disclosed. Corresponding decoding method and apparatus are further disclosed.

2. Background art

An omnidirectional video, also known as immersive video, is usually projected on a given layout, so that the final video to encode/decode fits in a rectangular frame, which is convenient to process with existing video codecs.
In the case of Equirectangular projection (ERP) for instance, a sphere is mapped onto a rectangular in a manner similar to a world's map projection.
When projecting an omnidirectional video on a given layout to fit a rectangular frame, it appears that the density of pixels is not stationary in the frame. More particularly, pixels close to the top and bottom of the frame correspond to few pixels once projected on the sphere.
In traditional video codecs, a quantization parameter (QP) and sometimes weight matrices are used for quantizing residual transform coefficients of a block from a 2D picture to encode. The choice of the QP value and weight matrices directly impacts the quantization step size (Qstep), and hence the SNR (Signal to Noise Ratio) or the quality of the frame reconstructed from such quantized residual transform coefficients. In addition, such parameters also allow controlling the bitrate of the compressed bit stream. Therefore, the choice of the QP value and the weight matrices is an important feature of a video coder in order to achieve the best trade-off between the quality and the bitrate of a coded video.
In standards such as HEVC, H.264/AVC, a frame is encoded by first dividing it into small non-overlapping blocks and then by encoding those blocks individually. The decoder, consequently, decodes a frame by decoding the individual blocks from the compressed bitstream. Since the blocks are processed and rendered individually, the QP value and weight matrices are decided on block basis. The existing standards allow these parameters to remain constant over a picture or change from block to block for better rate-distortion performance.
In a 2D picture representative of a picture from an omnidirectional video, blocks at different locations in the picture have high degrees of redundancies or periodicities among them because of the projection onto the rectangular 2D frame. Consequently, keeping the quantization constant for all the blocks in a frame would result in higher bitrate than is necessary for a given quality after rendering onto a 3D surface, for instance onto a sphere. Furthermore, the same quantization applied to a block of the 2D picture may result in different quality for a corresponding block of the 3D surface according to the projection method used to project the block of the 3D surface onto a 2D picture.
Thus, there is a need for a new method and apparatus of encoding and decoding omnidirectional videos.

3. Summary

According to an aspect of the present disclosure, a method for coding an omnidirectional video is disclosed. Such a mehod comprises, for at least one block of a picture of said omnidirectional video, scaling a value of each pixel of said block according to a spatial position of the pixel in said picture, and encoding said block.
According to another aspect of the present disclosure, an apparatus for coding an omnidirectional video is disclosed. Such an apparatus comprises, for at least one block of a picture of said omnidirectional video, means for scaling a value of each pixel of said block according to a spatial position of the pixel in said picture and means for encoding said block.
According to another aspect of the present disclosure, a method for decoding an omnidirectional video is disclosed. Such a method comprises, for at least one block of a picture of said omnidirectional video, decoding said block and inverse scaling a value of each pixel of said block according to a spatial position of the pixel in said picture.
According to another aspect of the present disclosure, an apparatus for decoding an omnidirectional video is disclosed. Such an apparatus comprises, for at least one block of a picture of said omnidirectional video, means for decoding said block and means for inverse scaling a value of each pixel of said block according to a spatial position of the pixel in said picture.
The present disclosure also concerns a computer program comprising software code instructions for performing the method for coding of the method for decoding an omnidirectional video according to any one of the embodiments disclosed below, when the computer program is executed by a processor.
The present disclosure also concerns a bitstream representative of a coded omnidirectional video comprising coded data representative of at least one block of a picture of said omnidirectional video and coded data representative of a set of scaling factors for inverse scaling pixel's value of said block accoding to a spatial position of said pixel in said picture.

4. Brief description of the drawings

Figure 1A illustrates an example of projection from a spherical surface S onto a rectangular picture F,

Figures 1B and 1C respectively illustrates coordinate reference systems for the rectangular picture and the spherical surface,

Figure 2A illustrates an example of projection from a cubic surface S onto 6 pictures,

Figure 2B illustrates a re-arranged rectangular picture corresponding to the projection from a cubic surface,

Figures 2C and 2D respectively illustrates coordinate reference systems for the rectangular picture and the cubic surface,

Figure 2E illustrates a layout used for re-arranging the 6 faces of the cube onto the rectangular picture whose coordinate reference system is disclosed in figure 2C,

Figure 3A illustrates block diagrams for an exemplary method for coding a picture from an omnidirectional video according to an embodiment of the present disclosure,

Figure 3B illustrates block diagrams for an exemplary method for coding a picture from an omnidirectional video according to another embodiment of the present disclosure,

Figure 4A illustrates a block diagram for an exemplary method for decoding a picture from an omnidirectional video according to an embodiment of the present disclosure,

Figure 4B illustrates a block diagram for an exemplary method for decoding a picture from an omnidirectional video according to another embodiment of the present disclosure,

Figure 5 illustrates a block diagram for an exemplary encoder for coding an omnidirectional video according to an embodiment of the present disclosure,

Figure 6 illustrates a block diagram for an exemplary decoder for decoding an omnidirectional video according to an embodiment of the present disclosure,

Figure 7 illustrates an exemplary apparatus for encoding or decoding an omnidirectional video according to an embodiment of the present disclosure.

5. Description of embodiments

Recently there has been a growth of available large field-of-view content (up to 360°). Such content is potentially not fully visible by a user watching the content on immersive display devices such as Head Mounted Displays, smart glasses, PC screens, tablets, smartphones and the like. That means that at a given moment, a user may only be viewing a part of the content. Although a user can navigate within the content by various means such as head movement, mouse movement, touch screen, voice and the like. A large field-of-view content may be, among others, a three-dimension computer graphic imagery scene (3D CGI scene), a point cloud or an immersive video.

Usually, an immersive video is encoded on a rectangular frame that is a two-dimension array of pixels (i.e. element of color information) like a "regular" video. To be rendered, the frame is, first, projected on the inner face of a convex volume, also called mapping surface (e.g. a sphere, a cube, a pyramid), and, second, a part of this mapped volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Immersive video may be encoded using traditional video codec, such as codecs based on HEVC, H.264/AVC, by encoding the rectangular frames of the immersive video. However, the aspect of the rectangular frames depends on the function used to map the surface onto the frame. The mapping function depends on the mapping surface. For a same mapping surface, several mapping functions are possible.

The projection of the surface onto the rectangular frames provides an arrangement of the pixels that modifies or breaks lines continuities, orthonormal local frame, pixel densities.

Many terms might be used to design such immersive videos: Virtual Reality (VR), 360, panoramic, $4\pi$ steradians, omnidirectional etc.

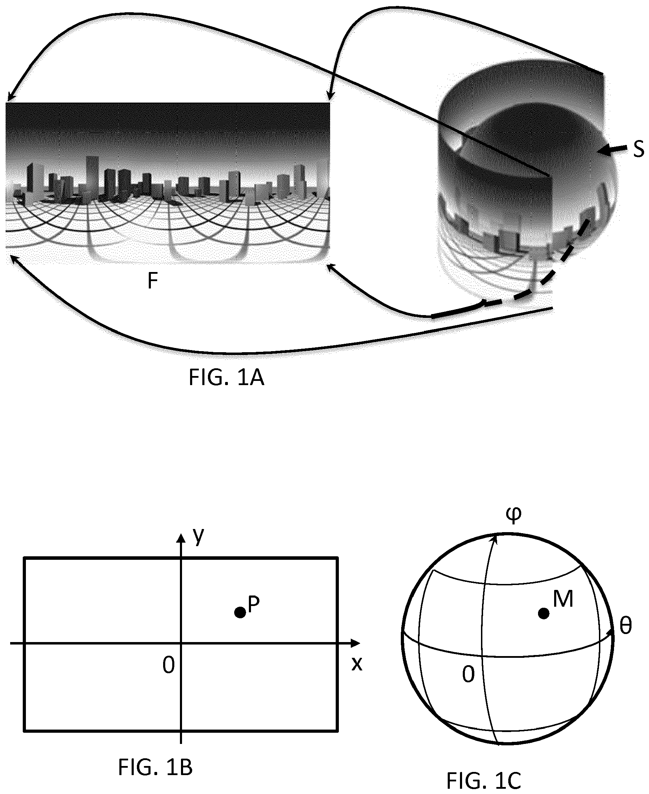

Figure 1A shows an example of projection from a surface S represented as a sphere onto one single rectangular picture F using an equi-rectangular projection. Figures 1B and 1C show respectively the coordinate reference system for the picture F and the sphere S.

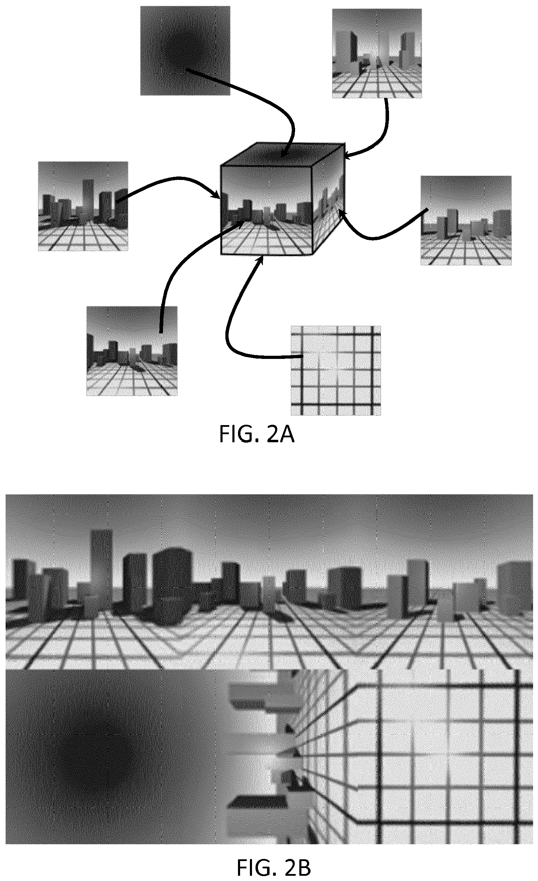

Figure 2A shows another example of projection from the surface S, here represented as a cube, onto six pictures or faces. The faces can possibly be re-arranged into one single picture as shown in figure 2B.

In an equi-rectangular projection, a relationship between the Cartesian co-ordinates on the XY-plane of the rectangular picture (shown in figure 1B) and the angular co-ordinates on the sphere (shown in figure 1C) is given as:

$$y = \varphi/\pi, \ -0.5 \leq y \leq 0.5, \ -\pi/2 \leq \varphi \leq \pi/2$$

$$x = \theta/2\pi, \ 0 \leq x \leq 1, \ 0 \leq \theta \leq 2\pi$$

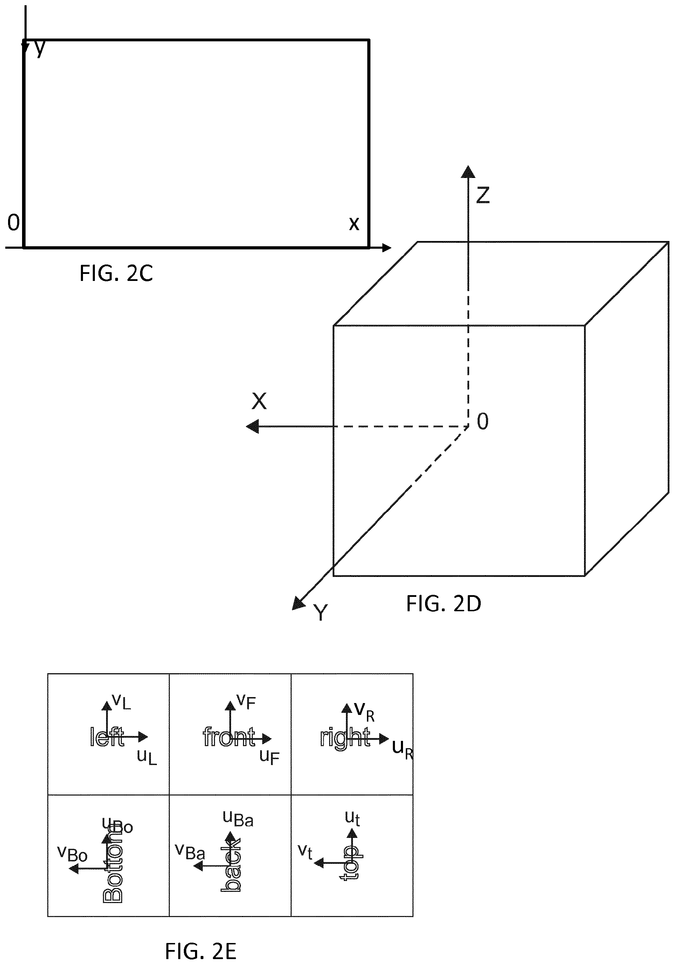

In a cube projection, a relationship between the co-ordinates on the XY-plane of a rectangular picture with coordinate reference system shown in figure 2C and the co-ordinates on the cube with coordinate reference system shown in figure 2D is given as:

$$f \begin{cases} Left: x < w, y > h: u = \dfrac{2x}{w} - 1, v = \dfrac{2(y - h)}{h} - 1 \ , k = 0 \\[2mm] front: w < x < 2w, y > h: u = \dfrac{2(x - w)}{w} - 1, v = \dfrac{2(y - h)}{h} - 1 \ , k = 1 \\[2mm] right: 2w < x, y > h: u = \dfrac{2(x - 2w)}{w} - 1, v = \dfrac{2(y - h)}{h} - 1 \ , k = 2 \\[2mm] bottom: x < w, y < h: u = \dfrac{2y}{h} - 1, v = \dfrac{2(w - x)}{w} - 1 \ , k = 3 \\[2mm] back: w < x < 2w, y < h: u = \dfrac{2y}{h} - 1, v = \dfrac{2(2w - x)}{w} - 1 \ , k = 4 \\[2mm] top: 2w < x, y < h: u = \dfrac{2y}{h} - 1, v = \dfrac{2(3w - x)}{w} - 1 \ , k = 5 \end{cases}$$

with the corresponding layout of the 6 faces onto the rectangular picture shown in figure 2E. The co-ordinate $k$ denotes the face number and $(u, v)$, where $u, v \in [-1,1]$, denote the coordinates on the face $k$. A face of the cube is of width $w$ and of height $h$.

In traditional video codecs, a quantization parameter (QP) and sometimes weight matrices are used for quantizing residual transform coefficients of a block from a 2D picture to encode. The choice of the QP value and weight matrices directly impacts the quantization step size (Qstep), and hence the SNR (Signal to Noise Ratio) or the quality of the frame reconstructed from such quantized residual transform coefficients. In addition, such parameters also allow controlling the bitrate of the compressed bit stream. Therefore, the choice of the QP value and the weight matrices is an important feature of a video coder in order to achieve the best trade-off between the quality and the bitrate of a coded video.

In standards such as HEVC, H.264/AVC, a frame is encoded by first dividing it into small non-overlapping blocks and then by encoding those blocks individually. The decoder, consequently, decodes a frame by decoding the individual blocks from the compressed bitstream. Since the blocks are processed and rendered individually, the QP value and weight matrices are decided on block basis. The existing standards allow these parameters to remain constant over a picture or change from block to block for better rate-distortion performance.

In a 2D picture representative of a picture from an omnidirectional video, blocks at different locations in the picture have high degrees of redundancies or periodicities among them because of the projection onto the rectangular 2D frame. Consequently, keeping the quantization constant for all the blocks in a frame would result in higher bitrate than is necessary for a given quality after rendering onto a 3D surface, for instance onto a sphere. Furthermore, the same quantization applied to a block of the 2D picture may result in different quality for a corresponding block of the 3D surface according to the projection method used to project the block of the 3D surface onto a 2D picture.

Therefore, there is a need to efficiently quantize the signal depending on its active density, i.e. the density of active pixels once projected at the rendering stage. The equi-rectangular projection (ERP), for instance, provides a mapping which results in a density depending on the vertical position. The density is maximal at the middle line, i.e. the equator of the rendered "sphere", and minimal at the top and bottom line, which correspond to the poles of the sphere. To give an idea, the top and bottom lines of pixels almost correspond to one point, the poles, on the sphere. Adapting the quantization or scaling in the pixel domain enables the encoder to potentially scale the signal differently at each spatial position, whereas quantization in the transform domain requires a common quantization parameter or matrix for each transformed block.

Existing methods balance the quality through the adaptation of the so-called Quantization Parameter (QP), which is implemented in most existing state-of-the art codecs such as HEVC (*in* ITU-T H.265 Telecommunication Standardization Sector of ITU, "Series H: Audiovisual and Multimedia Systems, Infrastructure of audiovisual services - Coding of moving video, High efficiency video coding." Oct-2014*)* and VP9 (*in* A. Grange, P. de Rivaz, and J. Hunt, "VP9 bitstream & decoding process specification," Google March, 2016).

However, QP drives the quantization step of the transformed coefficients. To compute a relation between the QP and the position of the pixels, a common position must be set for all the transformed block, e.g. the center of the block. However, such a method does not allow to adapt the quantization accurately according to the spatial position of a pixel.

According to an embodiment disclosed herein, a scaling performed on the residual samples is proposed, that enables to adapt the quantization step for each pixel of the content.

The relation between errors and quantization is now discussed below.

In an HEVC encoder for example, the quantization stage consists in dividing the integer transformed residues output from the transform stage, by a quantization matrix (QM). By default, this matrix can be written as:

$$QM = 16. \begin{pmatrix} 1 & \cdots & 1 \\ \vdots & \ddots & \vdots \\ 1 & \cdots & 1 \end{pmatrix} \qquad (1)$$

Where the matrix size corresponds to the size of the transformed block. This matrix is then multiplied by a factor $Q_{step}$. According to he HEVC specification for example, the quantization step size is determined from the QP parameter using the following basic relationship:

$$Q_{step}(QP) = 2^{\frac{QP-4}{6}}, \qquad (2)$$

where the QP value ranges from 0 to 51.

The general operation of over-sampling in any kind of projection can be expressed as an interpolation operation. Assuming a block based approach, the interpolation can be expressed as a matrix multiplication. Let $S_K$ denote the column vector of K samples which are over-sampled to the column vector of $J_N$ samples: $J_N = F * S_K$, here F denotes an interpolation matrix of dimension NxK. We assume that the interpolation operator is scaled suitably such that the average energy of the samples is maintained. Corresponding to the interpolation operator F, there always exists a reconstruction operator G of dimension KxN that can generate $S_K$ given $J_N$ as $\widehat{S_K} = G * J_N$.

In a general interpolation scenario, G is lossless. That is, G*F = $I_K$, where $I_K$ denotes the identity matrix of order K. In this case, $\widehat{S_K} = S_K$.

In practice, the samples in $J_N$ are quantized and rounded for digital representation. Let us assume that the elements of $J_N$ are uniformly quantized with quantization step size $Q_{step}$. If Q denotes the quantization error vector, the average quantization error of $J_N$ is equal to its variance, which we denote by $\sigma^2$. If we now decode $S_K$ from the quantized values of $J_N$, the average reconstruction error of $S_K$ is a scaled down version of $\sigma^2$. This is demonstrated in the following. Let $J_{NQ}$ denote the quantized $J_N$, where the components of $J_N$ are scalar quantized with step size $Q_{step}$. Using an additive quantization noise model, the decoded value of $S_K$ can be expressed as:

$$\widehat{S_K} = G * J_{N_Q} \triangleq G * (J + Q).$$

Hence the reconstruction error of $S_K$ is given as: $e \triangleq S_K - \widehat{S_K} = -G * Q.$

Assuming that the components of Q are uncorrelated, it can be shown that the mean square reconstruction error of $S_K$ is equal to $(\sigma^2/K)*tr(G^tG)$ where $tr()$ denotes the trace operator of a square matrix and the superscript t denotes the matrix transposition. In the special case, when the interpolation operator is orthonormal, that is, when F has orthonormal columns, the mean square reconstruction error is equal to $(K/N)*\sigma^2$. It can be shown that this is the minimum reconstruction error achievable with any interpolation operator. That is, the reconstruction error achieved with any other interpolation operator will be always more than or equal to this value. In a high rate uniform quantization case, $\sigma^2 = (1/3)*Qstep^2$. In this case, the mean square reconstruction error with orthonormal interpolation is equal to $\frac{K*Qstep^2}{3N}$.

In the following, the discussion focuses on the equi-rectangular projection (ERP) but the method can be adapted to any other projections.

For instance, if the principle discussed above is applied to the ERP case, the average reconstruction error at any $\varphi = d$ will be a scaled down version of the average reconstruction error at $\varphi = 0$, if the row of pixels for $\varphi = d$ is downsampled to the critically sampled version. Or equivalently, if we desire the same level of quantization error at $\varphi = d$, then we need to scale up the quantization step size for the oversampled pixels by factor $\sqrt{N/K}$. For the ERP case, the scale factor (K/N) is equal to $\cos\varphi$. Therefore, to have similar distortion at $\varphi=d$ and $\varphi=0$, $Q_{step}$ for pixels located at $\varphi=d$ must be increased by a factor $\sqrt{\frac{1}{\cos\varphi}}$, i.e. $\sqrt{(\frac{1}{\cos(\pi y)})}$ expressed with the normal vertical coordinate $y$ of the pixel.

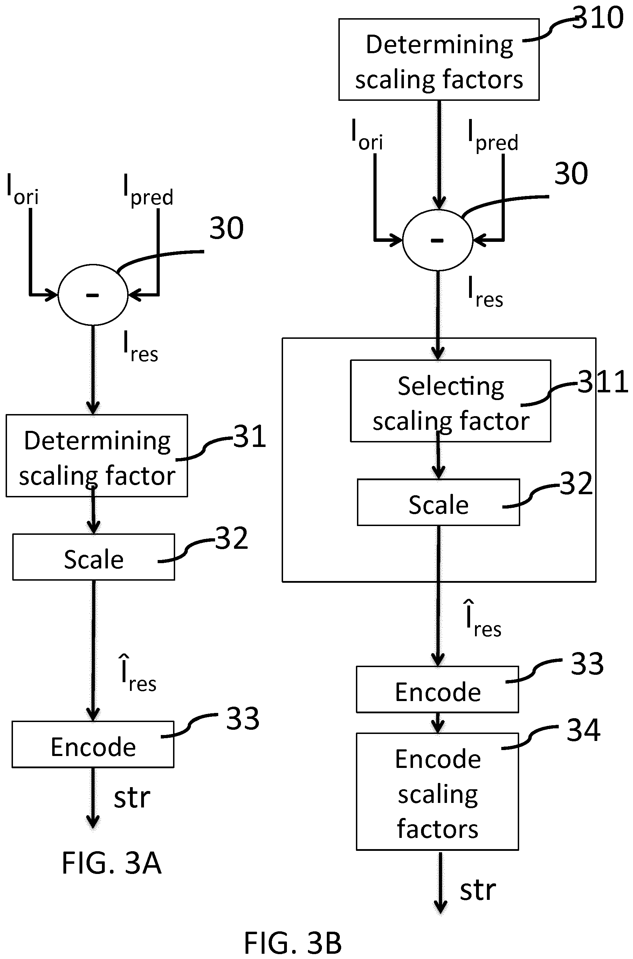

Figure 3A illustrates block diagrams for an exemplary method for coding a picture from an omnidirectional video according to an embodiment of the present disclosure.

According to an embodiment of the present disclosure, at step 30, for each pixel (*i,j*) of the picture to encode, a residual signal is computed as the difference between a prediction $I_{pred}(i,j)$ and the original version of the pixel $I_{ori}(i,j)$, i.e.

$$I_{res}(i,j) = I_{ori}(i,j) - I_{pred}(i,j) \quad (3)$$

Where (*i,j*) correspond to the coordinates of the pixel being considered in the pixel domain, i.e. in the rectangular picture representative of the projection of the omnidirectionnal video, and $I_{res}$, $I_{ori}$, and $I_{pred}$ correspond to the pixel intensities in Luma or Chroma of the residuals, the original content and the prediction respectively.

At step 32, the residual signal at each pixel is remapped or scaled with a function g:

$$\hat{I}_{res}(i,j) = g(I_{res}(i,j)). \quad (4)$$

where g depends on the mapping function used for mapping the omnidirectionnal video onto the rectangular frame. According to an embodiment of the present disclosure, when the omnidirectional video is mapped using an ERP function, g only depends on the vertical coordinate $i$ of the pixels.

In order to scale the residuals signal at step 32, a scaling factor is previously determined at step 31.

In the case of a scaling of the residuals, (4) becomes

$$\hat{I}_{res}(i,j) = \frac{I_{res}(i,j)}{q(i,j)}, \quad (5)$$

With $1/q(i,j)$ being the scale factor depending on the mapping function.

In the case of ERP projection, the scale factor only depends on the vertical coordinates i, the scaling factor is thus determined as

$$q(i) = q(0) * \sqrt{\frac{1}{\cos(\pi y)}}. \qquad (6)$$

where

$$y = \left| \frac{2i - h}{h} \right|, \qquad (7)$$

i.e. *y* corresponds to the normal version of i depending on the height *h* of the equirectangular frame and *y=0* for $i = \frac{h}{2}$.

In the case of a cube map projection, for each face of size SxS, the scaling factor is determined as:

$$q(i,j) = q(0)\left(1 + \frac{d^2(i,j)}{r^2}\right)^{3/4} = q(0) * \sqrt{\frac{1}{\left(1 + \frac{d^2(i,j)}{r^2}\right)^{-3/2}}}$$

where r=S/2 and the distance d between the position i,j within each face and the center of the face is given by:

$$d^2(i,j) = (i - r)^2 + (j - r)^2$$

The scaling factors given above are for illustrative purposes. Other scaling factors depending on the mapping function used are possible.

Such an operation in (5) is similar to a quantization in the transformed domain and will result in residuals being zeroed out, which will not be retrieved at the inverse scaling function at the decoder side. Such as quantization in the pixel domain enables to tailor the scaling at each location, whereas a quantization parameter or matrix must be set in the classical case. According to an embodiment of the present disclosure, the scaling discussed above does not prevent from further quantizing the transform coefficients.

According to an embodiment of the present disclosure, at step 33, the scaled residuals are then encoded into a bitstream. For instance, classical transformation, quantization and entropy encoding can be applied in a classical manner.

Figure 3B illustrates block diagrams for an exemplary method for coding a block of a picture from an omnidirectional video according to another embodiment of the present disclosure.

According to this embodiment, a set of scaling factors is determined at step 310, prior to picture coding.

The set of scaling factors can be determined as discussed with figure 3A. For each spatial position (i,j) of a picture, a scaling factor 1/q(i,j) is computed depending on the mapping function used for projecting the omnidirectional video onto the picture. The set of scaling factors is then stored in memory.

When the scaling factor only depends on the vertical position of the pixel, only one scaling fator per line can be computed for the picture. The scaling factor corresponding to a pixel is then selected according to the vertical position of the pixel.

At step 30, residulals signal is computed for each pixel (i,j). At step 311, a scaling factor is selected for each pixel according to the pixel spatial location and the selected scaling factor is used for scaling the pixel's residuals at step 32.

At step 33, the scaled residuals are encoded into a bitstream *str.*

According to a variant, in a step 34, the set of scaling factors can be encoded into the bistream *str,* so as to avoid computation of the scaling factors at the decoder side. For instance, the set of scaling factors can be coded in SEI message (Supplemental Enhancement Information message), in Sequence Parameter Sets (SPS), Picture Parameter Sets (PPS), in slice header, in Coding Tree Unit (CTU) syntax, per Tile, or in new structure such as Adaptation Picture Sets (APS).

The scaling factors can also be calculated with functions depending on the block structures produced by the encoder, as for example piece-wise scalar, linear or polynomial functions as well as look-up tables.

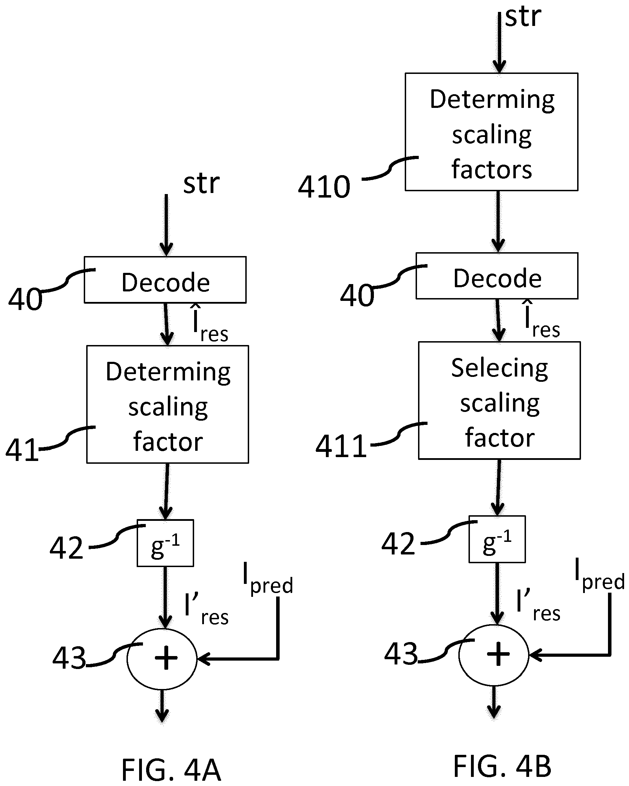

Figure 4A illustrates a block diagram for an exemplary method for decoding a picture from an omnidirectional video according to an embodiment of the present disclosure.

According to this embodiment, a bistream *str* representative of an encoded picture of an omnidirectional video is decoded at step 40. For instance, classical entropy decoding, inverse quantification and inverse transform are performed. A reconstructed version of scaled residuals is thus obtained for each pixel of the picture.

At step 42, the scaled residuals at each pixel is inversely mapped or inversely scaled with the inverse function $g^{-1}$:

$$I'_{res}(i,j) = g^{-1}(\hat{I}_{res}(i,j)). \qquad (8)$$

where $g^{-1}$ depends on the mapping function used for mapping the omnidirectionnal video onto the rectangular frame.

In the case of step 42 corresponds to a scaling, the scaling factor may be determined previously at step 41. Such a scaling factor corresponds to the inverse scaling factor used at the encoder side, and corresponds to $q(i,j)$.

At step 42, the inverse scaling is applied to the reconstructed scaled residuals: $I'_{res}(i,j) = q(i,j) \times (\hat{I}_{res}(i,j))$.

At step 43, the prediction signal is added to the reconstructed residuals to obtain the reconstructed value $I_{rec}(i,j)$ for the pixel: $I_{rec}(i,j) = I'_{res}(i,j) + I_{pred}(i,j)$.

Figure 4B illustrates a block diagram for an exemplary method for decoding a picture from an omnidirectional video according to another embodiment of the present disclosure.

According to this embodiment, a set of scaling factors for the picture to decode is determined at step 410. According to a variant, the set of scaling factors is computed for each pixel location according to the mapping function.

According to another variant, the set of scaling factors is decoded from the bistream *str* and stored in memory.

Decoding of the picture is then similar to the decoding process discussed with figure 4A, except that at step 411, the scaling factor for eacu pixel is selected from the set of scaling factors according to the pixel's location.

In the description above, the factor q is directly expressed as a function of the vertical position of each pixel, in the exemplary case of the ERP. Other projection formats use different mapping function that provide different mapping of the density of active pixels, which thus result in a different function g with q depending on *(i,j)*. However the principle disclosed above applied to any kind of projection format, only the mapping function has to be known.

The principle disclosed above may be used in a video codec configured for encoding and decoding an omnidirectional video according, as will be discussed below.

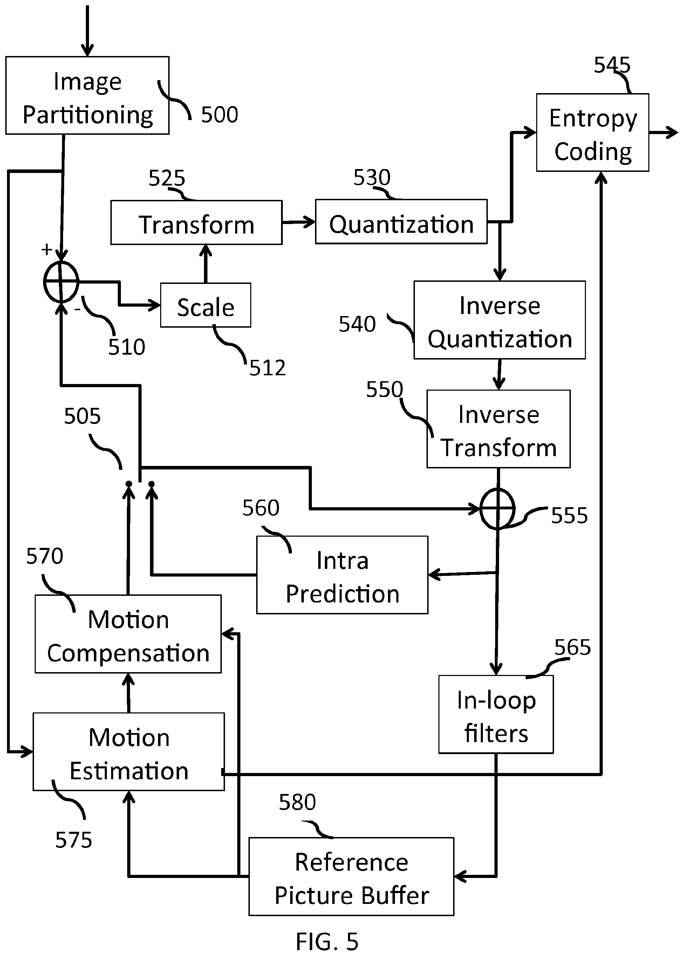

Figure 5 illustrates a block diagram for an exemplary encoder configured for encoding an omnidirectional video according to an embodiment of the present disclosure. For instance, the examplary encoder may be based on an HEVC encoder, or on any other video encoder. According to the embodiment discussed here, the omnidirectional video is encoded as a "regular" video, that is as a video sequence consisting in the retangular pictures onto which the omnidirectional video has been projected.

To encode a video sequence with one or more pictures, a picture is partitioned into one or more slices where each slice can include one or more slice segments. A slice segment is organized into coding units, prediction units and transform units. In the present application, the terms "reconstructed" and "decoded" may be used interchangeably, and the terms "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned (step 500) into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock and a partition as specified in H.264/AVC or other video coding standards, and more generally to refer to an array of data of various sizes.

In the exemplary encoder, a picture is encoded by the encoder elements as described below. The picture to be encoded is processed in units of CUs. Each CU is encoded using either an intra or inter mode. When a CU is encoded in an intra mode, it performs intra prediction (560). In order to exploit the spatial redundancy, CUs in intra mode are predicted from reconstructed neighboring samples within the same slice. The causal neighboring CUs have already been encoded/decoded when the encoding/decoding of the current CU is considered. To avoid mismatch, the encoder and the decoder have the same prediction. Therefore, both the encoder and the decoder use the information from the reconstructed/decoded neighboring causal CUs to form prediction for the current CU.

In an inter mode, motion estimation (575) and compensation (570) are performed using previously encoded/decoded pictures of the sequence.

The encoder decides (505) which one of the intra mode or inter mode to use for encoding the CU, and indicates the intra/inter decision by a prediction mode flag. Prediction residuals are calculated by subtracting (510) the predicted block from the original image block.

According to the embodiment discussed herein, the prediction residuals are scaled (512) using a scaling factor or a scaling function. The scaling factor or scaling function depends on the spatial location of the pixel being scaled and it is determined according to the mapping function used for mapping the omnidirectional video onto the picture being encoded. The scaling factor or scaling function can be determined as discussed above in relation with figures 3A or 3B.

The prediction residuals are then transformed (525) and quantized (530). The quantized transform coefficients, as well as motion vectors and other syntax elements, are entropy coded (545) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (540) and inverse transformed (550) to decode prediction residuals. Combining (555) the decoded prediction residuals and the predicted block, an image block is reconstructed. In-loop filters (565) are applied to the reconstructed picture, for example, to perform deblocking/SAO (Sample Adaptive Offset) filtering to reduce encoding artifacts. The filtered image is stored at a reference picture buffer (580).

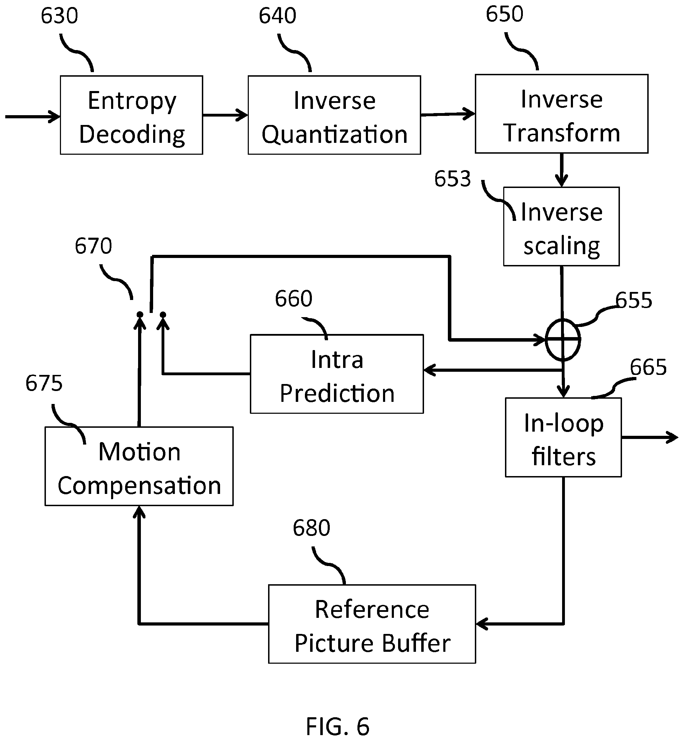

Figure 6 illustrates a flow diagram for an exemplary decoder configured for decoding a bistream comprising coded data representative of an omnidirectional video according to an embodiment of the present disclosure. For instance, such an exemplary decoder may correspond to an HEVC video decoder. In the exemplary decoder of figure 6, a bitstream is decoded by the decoder elements as described below. Video decoder generally performs a decoding pass reciprocal to the encoding pass as described in FIG. 5, which performs video decoding as part of encoding video data.

In particular, the input of the decoder includes a video bitstream, which may be generated by video encoder of figure 5. The bitstream is first entropy decoded (630) to obtain transform coefficients, motion vectors, and other coded information. The transform coefficients are de-quantized (640) and inverse transformed (650) to decode the prediction residuals.

According to the embodiment discussed herein, the prediction residuals are inversely scaled (653) using the inverse scaling factor or inverse scaling function that was used at the encoder side. The inverse scaling factor or inverse scaling function depends on the spatial location of the pixel being scaled and it is determined according to the mapping function used for mapping the omnidirectional video onto the picture being decoded. The inverse scaling factor or inverse scaling function can be determined as discussed above in relation with figures 4A or 4B.

Then, the scaled prediction residuals are combined (655) with the predicted block, to reconstruct an image block. The predicted block may be obtained (670) from intra prediction (660) or motion-compensated prediction (i.e., inter prediction) (675). In-loop filters (665) are applied to the reconstructed image. The filtered image is stored at a reference picture buffer (680) for future use in inter-prediction.

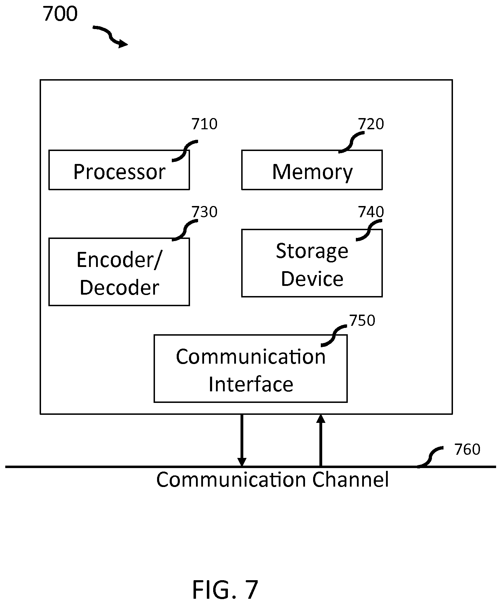

Figure 7 illustrates a block diagram of an exemplary system in which various aspects of the exemplary embodiments may be implemented. System 700 may be embodied as a device including the various components described below and is configured to perform the processes described above. Examples of such devices, include, but are not limited to, personal computers, laptop computers, smartphones, tablet computers, Head Mounted Devices, digital multimedia set top boxes, digital television receivers, personal video recording systems, connected home appliances, and servers. System 700 may be communicatively coupled to other similar systems, and to a display via a communication channel as shown in FIG. 7 and as known by those skilled in the art to implement the exemplary video system described above.

The system 700 may include at least one processor 710 configured to execute instructions loaded therein for implementing the various processes as discussed above. Processor 710 may include embedded memory, input output interface and various other circuitries as known in the art. The system 700 may also include at least one memory 720 (e.g., a volatile memory device, a non-volatile memory device). System 700 may additionally include a storage device 720, which may include non-volatile memory, including, but not limited to, EEPROM, ROM, PROM, RAM, DRAM, SRAM, flash, magnetic disk drive, and/or optical disk drive. The storage device 740 may comprise an internal storage device, an attached storage device and/or a network accessible storage device, as non-limiting examples. System 700 may also include an encoder/decoder module 730 configured to process data to provide an encoded omnidirectionnal video or decoded omnidirectionnal video.

Encoder/decoder module 730 represents the module(s) that may be included in a device to perform the encoding and/or decoding functions. As is known, a device may include one or both of the encoding and decoding modules. Additionally, encoder/decoder module 730 may be implemented as a separate element of system 700 or may be incorporated within processors 710 as a combination of hardware and software as known to those skilled in the art.

Program code to be loaded onto processors 710 to perform the various processes described hereinabove may be stored in storage device 740 and subsequently loaded onto memory 720 for execution by processors 710. In accordance with the exemplary embodiments, one or more of the processor(s) 710, memory 720, storage device 740 and encoder/decoder module 730 may store one or more of the various items during the performance of the processes discussed herein above, including, but not limited to the input video, the decoded video, the bitstream, equations, formula, matrices, variables, operations, and operational logic.

The system 700 may also include communication interface 750 that enables communication with other devices via communication channel 760. The communication interface 750 may include, but is not limited to a transceiver configured to transmit and receive data from communication channel 760. The communication interface may include, but is not limited to, a modem or network card and the communication channel may be implemented within a wired and/or wireless medium. The various components of system 700 may be connected or communicatively coupled together using various suitable connections, including, but not limited to internal buses, wires, and printed circuit boards.

The exemplary embodiments may be carried out by computer software implemented by the processor 710 or by hardware, or by a combination of hardware and software. As a non-limiting example, the exemplary embodiments may be implemented by one or more integrated circuits. The memory 720 may be of any type appropriate to the technical environment and may be implemented using any appropriate data storage technology, such as optical memory devices, magnetic memory devices, semiconductor-based memory devices, fixed memory and removable memory, as non-limiting examples. The processor 710 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to an aspect of the present disclosure, a method for coding an omnidirectional video is disclosed. Such a mehod comprises, for at least one block of a picture of said omnidirectional video, scaling a value of each pixel of said block according to a spatial position of the pixel in said picture, and encoding said block.

According to another aspect of the present disclosure, an apparatus for coding an omnidirectional video is disclosed. Such an apparatus comprises, for at least one block of a picture of said omnidirectional video, means for scaling a value of each pixel of said block according to a spatial position of the pixel in said picture and means for encoding said block.

According to another aspect of the present disclosure, a method for decoding an omnidirectional video is disclosed. Such a method comprises, for at least one block of a picture of said omnidirectional video, decoding said block and inverse scaling a value of each pixel of said block according to a spatial position of the pixel in said picture.

According to another aspect of the present disclosure, an apparatus for decoding an omnidirectional video is disclosed. Such an apparatus comprises, for at least one block of a picture of said omnidirectional video, means for decoding said block and means for inverse scaling a value of each pixel of said block according to a spatial position of the pixel in said picture.

According to the present disclosure, the importance of the different areas in the picture is balanced by scaling of the value of pixels accoding to their spatial position. Therefore, optimized bitrate allocation can be found. Scaling of the pixel's value of a block is perfomed in the pixel domain rather than in the transformed domain so that an accurate variation of the scaling factor with regards to the pixel's spatial position can be used.

According to an embodiment of the present disclosure, said value of each pixel corresponds to a residual value corresponding to a difference between an original value of the pixel and a prediction value for the pixel. According to this embodiment, such a scaling is similar as a quantization step usually performed in the transform domain as some of the residuals may be zeroed out by the scaling, and will not be retrieved by the inverse scaling at the decoder side. By performing scaling in the pixel domain, such a scaling allows to tailor the scaling at each location, whereas a quantization parameter or matrix must be set in a classical case.

According to another embodiment of the present disclosure, said video is represented as a surface, said surface being projected onto said picture using a projection function.

According to another embodiment of the present disclosure, scaling or inverse scaling a value of each pixel of said block according to a spatial position of the pixel in said picture comprises determining a scaling factor according to said projection function, and scaling or inverse scaling said value with said scaling factor.

According to another embodiment of the present disclosure, the method for coding or for decoding or the apparatus for coding or for decoding further comprises determining, for at least said picture, a set of scaling factors according to said projection function, and scaling or inverse scaling a value of each pixel of said block according to a spatial position of the pixel in said picture comprises selecting a scaling factor among the set of scaling factors according to a spatial position of the pixel in said picture and scaling or inverse scaling said value of the pixel with the selected scaling factor.

According to this embodiment, scaling factors are computed once at the encoder and stored in look-up tables. Look-up tables can then be recomputed at the decoder side using the projection function or sent to the decoder.

According to another embodiment of the present disclosure, encoding said block comprises transforming and quantizing scaled values for said block.

According to another embodiment of the present disclosure, decoding said block comprises inverse quantizing and inverse transforming coefficients of said block to deliver scaled values for said block.

According to another embodiment of the present disclosure, said projection function is an equi-rectangular projection, and wherein said set of scaling factors comprises only one scaling factor for each row of said picture.

According to another embodiment of the present disclosure, said set of scaling factors is coded in:

- a Sequence Parameter Set syntax element,

- a Picture Parameter Set syntax element, or

- a Slice Header syntax element corresponding to said picture.

The present disclosure also concerns a computer program comprising software code instructions for performing the method for coding of the method for decoding an omnidirectional video according to any one of the embodiments disclosed below, when the computer program is executed by a processor.

The present disclosure also concerns a bitstream representative of a coded omnidirectional video comprising coded data representative of at least one block of a picture of said omnidirectional video and coded data representative of a set of scaling factors for inverse scaling pixel's value of said block accoding to a spatial position of said pixel in said picture.

**Claims**

1. A method for coding an omnidirectional video comprising, for at least one block of a picture of said omnidirectional video:

    - scaling (32) a value of each pixel of said block according to a spatial position of the pixel in said picture,
    - encoding (33) said block.

2. An apparatus for coding an omnidirectional video comprising for at least one block of a picture of said omnidirectional video:

    - means (710, 720) for scaling a value of each pixel of said block according to a spatial position of the pixel in said picture,
    - means (710, 720) for encoding said block.

3. A method for decoding an omnidirectional video comprising, for at least one block of a picture of said omnidirectional video:

    - decoding (40) said block,
    - inverse scaling (42) a value of each pixel of said block according to a spatial position of the pixel in said picture.

4. An apparatus for decoding an omnidirectional video comprising, for at least one block of a picture of said omnidirectional video:

    - means (710, 720) for decoding said block,
    - means (710, 720) for inverse scaling a value of each pixel of said block according to a spatial position of the pixel in said picture.

5. The method according to claim 1 or 3, or the apparatus according to claim 2 or 4, wherein said value of each pixel corresponds to a residual value corresponding to a difference between an original value of the pixel and a prediction value for the pixel.

6. The method according to any one of claims 1, 3 or 5, or the apparatus according to any one of claims 2, 4 or 5, wherein said video is represented as a surface, said surface being projected onto said picture using a projection function.

7. The method or the apparatus according to claim 6, wherein scaling or inverse scaling a value of each pixel of said block according to a spatial position of the pixel in said picture comprises determining a scaling factor according to said projection function, and scaling or inverse scaling said value with said scaling factor.

8. The method or the apparatus according to claim 6, further comprising determining, for at least said picture, a set of scaling factors according to said projection function, and wherein scaling or inverse scaling a value of each pixel of said block according to a spatial position of the pixel in said picture comprises selecting a scaling factor among the set of scaling factors according to a spatial position of the pixel in said picture and scaling or inverse scaling said value of the pixel with the selected scaling factor.

9. The method for coding a video according to any one of claims 1 or 5, or the apparatus for coding a video according to any one of claims 2 or 5, wherein encoding said block comprises transforming and quantizing scaled values for said block.

10. The method for decoding a video according to any one of claims 3 or 5, or the apparatus for decoding a video according to any one of claims 4 or 5, wherein decoding said block comprises inverse quantizing and inverse transforming coefficients of said block to deliver scaled values for said block.

11. The method according to claim 8, or the apparatus according to claim 8, wherein said projection function is an equi-rectangular projection, and wherein said set of scaling factors comprises only one scaling factor for each row of said picture.

12. The method according to claim 8, or the apparatus according to claim 8, wherein said set of scaling factors is coded in:

   - a Sequence Parameter Set syntax element,
   - a Picture Parameter Set syntax element, or
   - a Slice Header syntax element corresponding to said picture.

13. A computer program comprising software code instructions for performing the method for coding an omnidirectional video according to any one of claims 1 or 5 to 12, when the computer program is executed by a processor.

14. A computer program comprising software code instructions for performing the method for decoding an omnidirectional video according to any one of claims 3 to 5 to 12, when the computer program is executed by a processor.

15. A bitstream representative of a coded omnidirectional video comprising:

   - coded data representative of at least one block of a picture of said omnidirectional video,
   - coded data representative of a set of scaling factors for inverse scaling pixel's value of said block accoding to a spatial position of said pixel in said picture.

FIG. 1A

FIG. 1B

FIG. 1C

FIG. 2A

FIG. 2B

FIG. 2C

FIG. 2D

FIG. 2E

$I_{ori}$   $I_{pred}$

30

$I_{res}$

Determining
scaling factor — 31

Scale — 32

$\hat{I}_{res}$

Encode — 33

str

## FIG. 3A

Determining
scaling factors — 310

$I_{ori}$   $I_{pred}$

30

$I_{res}$

Selecting
scaling factor — 311

Scale — 32

$\hat{I}_{res}$

Encode — 33

Encode
scaling
factors — 34

str

## FIG. 3B

str

Determing
scaling
factors

410

str

Decode

40

$\hat{I}_{res}$

Determing
scaling
factor

41

Decode

40

$\hat{I}_{res}$

Selecing
scaling
factor

411

42 $g^{-1}$

42 $g^{-1}$

$I_{pred}$

$I'_{res}$

$I_{pred}$

$I'_{res}$

43 +

43 +

FIG. 4A

FIG. 4B

FIG. 5

630

Entropy
Decoding

640

Inverse
Quantization

650

Inverse
Transform

653

Inverse
scaling

670

660

Intra
Prediction

655

675

Motion
Compensation

665

In-loop
filters

680

Reference
Picture Buffer

FIG. 6

700

FIG. 7

Europäisches
Patentamt

European
Patent Office

Office européen
des brevets

# EUROPEAN SEARCH REPORT

Application Number

EP 18 30 5620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 301 921 A1 (THOMSON LICENSING [FR]) 4 April 2018 (2018-04-04) * paragraph [0020]; claim 1; figures 2-5 * | 1-15 | INV. H04N19/126 H04N19/182 H04N19/167 H04N19/597 |
| X | YULE SUN ET AL: "AHG8: Stretching ratio based adaptive quantization for 360 video", 6. JVET MEETING; 31-3-2017 - 7-4-2017; HOBART; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-F0072, 30 March 2017 (2017-03-30) , XP030150744, * abstract; figure 1 * | 1-15 | |
| X | RACAPE F ET AL: "AHG8: adaptive QP for 360 video coding", 6. JVET MEETING; 31-3-2017 - 7-4-2017; HOBART; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-F0038-v2, 31 March 2017 (2017-03-31), XP030150692, * abstract; figure 1 * | 1-15 | |
| X | XIU X ET AL: "EE3 Related: Adaptive quantization for JEM-based 360-degree video coding", 7. JVET MEETING; 13-7-2017 - 21-7-2017; TORINO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-G0089-v3, 14 July 2017 (2017-07-14), XP030150887, * abstract; figure 1 * | 1-15 | |

TECHNICAL FIELDS
SEARCHED (IPC)

H04N

-/--

The present search report has been drawn up for all claims

| Place of search | Date of completion of the search | Examiner |
|---|---|---|
| Munich | 31 July 2018 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 18 30 5620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YULE SUN ET AL: "EE3: Adaptive QP for 360° video", 7. JVET MEETING; 13-7-2017 - 21-7-2017; TORINO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-G0106, 6 July 2017 (2017-07-06), XP030150907, * abstract; figures 1,2 * | 1-15 | |

TECHNICAL FIELDS
SEARCHED      (IPC)

The present search report has been drawn up for all claims

| Place of search | Date of completion of the search | Examiner |
|---|---|---|
| Munich | 31 July 2018 | Oelbaum, Tobias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 30 5620

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2018

| Patent document cited in search report | | Publication date | Patent family member(s) | | Publication date |
|---|---|---|---|---|---|
| EP 3301921 | A1 | 04-04-2018 | EP | 3301921 A1 | 04-04-2018 |
| | | | WO | 2018060328 A1 | 05-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ITU-T H.265 Telecommunication Standardization Sector of ITU. *Series H: Audiovisual and Multimedia Systems, Infrastructure of audiovisual services - Coding of moving video, High efficiency video coding,* October 2014

- **A. GRANGE ; P. DE RIVAZ ; J. HUNT.** VP9 bitstream & decoding process specification. *Google,* March 2016